# EUROPEAN PATENT APPLICATION

(11) **EP 4 841 307 A1**
(43) Date of publication of application: **18.11.2026**
(21) Application number: 25176529.3
(22) Date of filing: 14.05.2025
(51) Int. Cl.: G01S 17/10, G01S 17/48, G01S 17/88, G01S 7/48, G01S 17/89, G01S 17/00

(54) **SYSTEM AND METHOD FOR OPTICAL SENSING**

(71) Applicant: VoxelSensors SRL, 1000 Brussels (BE)
(72) Inventor: Aliaksandr, Kamovich, 1180 Uccle (BE); Van Der Tempel, Ward, 3140 Keerbergen (BE)

(57) **Abstract**

Disclosed is a method for optical sensing, particularly in an underwater environment. The method comprises projecting a light beam (4) onto a scene (10) by means of a projector (3). The scene (10) comprises a medium with an unknown distribution or density of obstacles (5', 5", 5‴) and an object (6) to be distinguished. The light beam (4) has a predetermined diameter (16) larger than the obstacles (5', 5", 5‴). The obstacles (5', 5", 5‴) are partially transparent and partially reflective to said light beam (4). The method further comprises imaging the reflected light (7', 7", 7"'), by means of optics, on sensing units (14) of an optical sensor (2), wherein each of said sensing units (14) comprises a single photon detector. The method further comprises determining locations of detection (8', 8", 8‴) of said obstacles (5', 5", 5‴) in said scene (10) on said optical sensor (2) during a plurality of adjacent observation windows. The method further comprises constructing, based on said locations of detection (8', 8", 8‴), a depth map of said obstacles (5', 5", 5‴) in said scene (10) based on statistics per sensing unit over said plurality of adjacent observation windows. The method further comprises estimating, based on said detection statistics, a reflectivity profile of at least part of said plurality of particles in a first volume of the scene (10). The method further comprises determining, based on said depth map, the unknown distribution or density of said obstacles (5', 5", 5‴) in said scene (10).

## Description

### TECHNICAL FIELD

The present invention relates to a method and system for optical sensing.

### BACKGROUND

Capturing the world has become important for users over the past decade. There is a huge demand for cameras, which often come integrated with mobile phones. The problem is that the environments in which these cameras work are not always ideal. For example, dust particles could hinder the vision of such cameras. Also, in the case of underwater vision, particles such as algae could also hinder vision of such cameras. Other scenarios could be envisaged where particles could hinder vision. The working range (the distance in which the camera can operate) in these conditions is limited, due to the presence of particles. Accuracy over long distances is also compromised.

Other challenges include absorption and scattering of light due to such obstacles, leading to inaccurate detection, false object reconstructions, and difficulties in differentiating between true objects and noise from diffuse particles.

There is a need therefore for an accurate, long-range, and power efficient solution. The present invention aims to resolve at least in part the problems mentioned above.

### SUMMARY OF THE INVENTION

It is an object of embodiments of the present invention to overcome the limitations discussed above and obtain an accurate, long-range, and power efficient solution.

In a first aspect, the present invention relates to a method for optical sensing, comprising the steps of:
- projecting a light beam onto a scene, by means of a projector, wherein the scene comprises a medium including a plurality of particles, wherein the projector projects the light beam in a first predetermined angle (α),
- imaging light of said light beam reflected by said plurality of particles, by means of optics, on sensing units of an optical sensor, wherein each of said sensing unit comprises a single photon detector,
- during a plurality of adjacent observation windows, determining locations of the sensing units within the optical sensor having imaged said reflected light,
- performing detection statistics per sensing unit over said plurality of adjacent observation windows, and
- estimating, based on said detection statistics, a reflectivity profile of at least part of said plurality of particles in a first volume of the scene along said light beam.

In particular, the scene comprises a medium, such as for example water or air, with an unknown distribution and/or density of obstacles and/or particles obscuring a normal view of the scene. The light beam projected onto the scene has a predetermined diameter, such that at least one, preferably most, of said obstacles or particles is smaller than, preferably two times smaller than, said predetermined diameter of said light beam. At least one, and preferably all, of said obstacles or plurality of particles is preferably partially transparent and partially reflective to said light beam. The plurality of particles can for example be dust particles or pollen in the air or algae in water or any other type of particles in a fluid. The predetermined angle is defined between the projected light beam and a normal to the base defined by the projector and the optical sensor. When light is reflected by one or more of said particles, the reflected light is detected by the optical sensor, in particular by one or more sensing units of the optical sensor. Each of said sensing unit comprises a single photon detector which is configured to provide at least a binary signal whether or not a presence of a photon has been detected on the detector. Additionally, a single photon detector may be configured to count a number of detected photons. The sensing units have a resolution adapted such that images of the particles or obstacles on said optical sensor are distinct. It is then determined by which sensing units the reflected light is detected, and what the position is within the optical sensor of the sensing units that have detected said reflected light. The time needed to do said determining is called the observation window. In other words, the observation window is the time needed to find sensing units or pixels having detected events, i.e. light reflections, which is an at least partial read-out of the optical sensor and can correspond to a refresh rate of the sensor. Detection statistics per sensing units can for example include counts of a number of detections by said sensing unit over several observation windows divided by the number of detections on neighbouring sensing units or pixels. Said detection statistics can include histograms. To estimate, based on said detection statistics, a reflectivity profile of at least part of said plurality of particles, in particular of those particles in a first volume of the scene along said light beam, detection of reflected light on a line on the optical sensor may be compared to detections of reflected light near said line on the optical sensor to estimate a blur or blurriness coefficient. The first volume along said light beam is supposed to be the volume being closest to the projector, in other words, the first portion of the scene the light beam is crossing after projection.

It is an advantage of embodiments of the present invention that a reflectivity profile of at least part of the particles in a first volume can be estimated. This is advantageous in being power efficient and fast. It is an advantage of embodiments of the present invention that depth of objects in a scene with many obstacles (e.g. particles) can be found.

Preferred embodiments of the first aspect of the invention comprise one or a suitable combination of more than one of the following features.

The method can further comprise the step of determining, based on said reflectivity profile, said determined locations of said imaged light on the optical sensor, said detection statistics and said first predetermined angle, a relative density of said particles in a second volume, wherein the second volume is further away from the projector than the first volume. Without knowledge of the type of particles, it is not possible to estimate a density of particles in said first volume. However, thanks to the estimate of the reflectivity profile of the particles in the first volume, it is possible to estimate a reflectivity profile in a second or further volume being further away from the projector than the first volume. Comparing the reflectivity profile of the second volume to the reflectivity profile of the first volume can allow to say whether a density of particles in the second volume is higher or lower than in the first volume, which is a relative density, even without knowing an absolute density of particles in the first volume.

The step of estimating a reflectivity profile of the plurality of particles may preferably include a calibration step for a known type of said plurality of particles. Such a calibration step may be a theoretical calibration, for example by theoretically simulating the system including known densities of known particles having known shapes and known reflectivity and deriving theoretical formulas establishing the link between reflectivity and density for a given type of particle. Additionally, and/or alternatively, the calibration can be done experimentally. In particular, the method can first be performed under controlled circumstances, i.e. with a known type of particles and known density, to derive a link between a reflectivity profile and a density of particles. For a known type of particles, the method may then further comprise the step of determining, based on said reflectivity profile, said determined locations of said imaged light on the optical sensor, said detection statistics, said calibration and said first predetermined angle, a density of said particles in said first volume of the scene (10) along said light beam. A density of particles is a number of particles per volume.

The method further can further comprise the step of determining a density of said particles in a second volume along said light beam based on the determined density in the first volume, the second volume being further away from the projector than the first volume. In other words, the original scene or medium is a volume which can be subdivided into a plurality of sub-volumes, and the density of the plurality of particles can be determined in a step-by-step base starting from the determination of the density in a nearby sub-volume, i.e. close to the projector, which first determination can then be used to determine the density in a further sub-volume. In this way, in spite of a medium full of scattering and/or absorption, a density of particles can be determined in a relatively efficient way, which may for example be used to determine whether or not a population of algae in water has grown. Moreover, knowing the densities of particles in the plurality of sub-volumes, a rough distribution of the particles can be derived.

It is also advantageous that an effective method for detecting the distribution and/or density of particles in a scattering and absorbing environment is obtained.

The step of estimating a reflectivity profile is at least partly based on comparing locations of the sensing units having detected reflected light with events on adjacent sensing units. Reflection by the plurality of particles of light projected by the light beam on the scene is expected to be detectable on sensing units of the optical sensor along a line. However, part of this reflected light may be detected by sensing units near this line, resulting in a kind of blurry line. Comparison of events detected on this line and near this line of expected detections may therefore give an indication of a reflectivity profile of the particles. Additionally, non-events, i.e. locations on the optical sensor where a detection was expected but where no light reflection has been detected, may also be taken into account when estimating said reflectivity profile of the plurality of particles.

The method preferably further comprises the step of reorienting said light beam such that at least a second predetermined angle, different from said first predetermined angle, is formed with the normal line of the projector. In other words, the method may further comprise the step of scanning the scene at a scanning speed by reorienting the projection of said light beam in a second predetermined angle (β), different from said first predetermined angle (α), and repeating the steps of imaging reflected light, determining locations, performing detection statistics for said second angle. The scanning speed is advantageously smaller than a sensing units read-out rate (also called refresh rate). As an example, the scanning speed of the light beam projected onto the scene may be between 1 to 5 Kilohertz, but may also amount to around 20 or 21 Kilohertz while a refresh rate of the optical sensor may be comprised between 5 to 10 million events per second and may go up to around 20 million events per second. As a result, the beam position will overlap for more or less 90% (or in another example 50% to 95%) over two adjacent observation windows, providing relatively reliable detection statistics.

The method can then comprise the step of obtaining the distribution and/or density of said obstacles or plurality of particles over a region of said scene between the optical sensor and the obstacles corresponding to the first and second predetermined angles, based on the distribution and/or density of obstacles along said light beam at the first and second predetermined angles. It is an advantage of embodiments of the present invention that the distribution and/or density of obstacles in the scene is accurately obtained.

The method may further comprise the step of constructing, at least partly based on said detection statistics and on said first predetermined angle, a depth map of said plurality of particles in said scene, at least along said light beam. The depth map is preferably obtained by triangulation between the optical sensor and the projector, and/or by time-of-flight measurement based on said light beam emitted from said projector and received by said optical sensor. It is an advantage of embodiments of the present invention that the depth map of the scene is accurately obtained.

A first depth map is preferably obtained by said triangulation, and a second depth map is obtained by said time-of-flight measurement, wherein the method comprises the step of comparing the first and second depth maps, and based on the difference between the first and second depth maps, scattering and absorption parameters of said particles may be determined. In particular, when time-of-flight measurements give a higher depth than triangulation, it may be considered that the depth given by triangulation is relatively correct while the time-of-flight measurement can be used to derive scattering. This information on scattering is additional to the information derived from comparing in line detections on the detector with neighbouring detections on the detector. It is therefore also advantageous that further information about the reflection, absorption, and scattering introduced by said particles is obtained.

The first and second depth maps preferably correspond to a second region in said scene, wherein said second region has an unknown distribution and/or density of obstacles in said scene, wherein a first region, closer to said optical sensor from said second region, has a known distribution and/or density of obstacles in said scene, wherein the method comprises the step of interpolating said unknown distribution and/or density of obstacles in said second region, based on the known distribution and/or density of obstacles in said first region.

It is an advantage of embodiments of the present invention that an accurate method of getting the distribution and/or density of obstacles in a scene is obtained.

The method preferably comprises the step of determining, based on said difference between the first and second depth maps, reflection, scattering and absorption parameters of said obstacles in said scene. It is an advantage of embodiments of the present invention that a reliable and efficient method of getting information of obstacles or particles in a scene is obtained.

The obstacles are preferably particles having a diameter smaller than 1 millimeter. It is an advantage of embodiments of the present invention that atmospheric particles e.g. dust, and underwater particles e.g. algae, can be detected and distinguished from a target object obscured by a plurality of said particles.

The method preferably comprises the step of counting the photons received on each sensing unit, and further comprises the step of establishing detection or photon statistics on said optical sensor, and determining, based on said photon statistics, the distribution and/or density of said obstacles in the scene. For example, each of said sensing unit comprises a single photon detector which is configured to provide at least a binary signal whether or not a presence of a photon has been detected on the detector. Additionally, a single photon detector may be configured to count a number of detected photons.

The method preferably comprises the step of filtering noisy detections on said sensing units, based on said photon statistics. It is an advantage of embodiments of the present invention that an accurate sensing of obstacles in the scene is obtained.

Preferably, the step of determining the unknown distribution and/or density of said obstacles, comprises the step of determining depth of objects in the scene. It is an advantage of embodiments of the present invention that, next to finding distribution and/or density of obstacles in the scene, it is possible to get an understanding of the 3D nature of objects in the scene.

The method preferably comprises the step of filtering the detection determined by one sensing unit of said optical sensor, based on the presence of a detection over at least one neighboring sensing unit to said one sensing unit at one observation window or time step, and/or based on the presence of said detection over at least two consecutive observation windows or time steps. It is an advantage of embodiments of the present invention that an accurate optical sensing is obtained.

The light beam is preferably a pulsed light beam. It is an advantage of embodiments of the present invention that power is concentrated in one pulse, which allows easier detection and filtering.

The optical sensor is preferably a plane optical sensor, wherein said plane optical sensor comprises a plurality of rows and columns of said sensing units, wherein said optics have an optical center, wherein said optical center, and said light beam define a projection plane, said projection plane forming a straight line image on the plane optical sensor.

The method preferably further comprises the step of activating sensing units in a first region of said optical sensor where a detection of the reflected light by said optical sensor is expected, and deactivating sensing units in at least a second region where a detection of the reflected light by said optical sensor is not expected, wherein said activating and deactivating are based on the instantaneous projection vector direction of the light beam on the scene. This is advantageous in obtaining a power efficient system, since not the full optical sensor is activated, for example not all pixels or sensing units are operating all the time, but only those for which a detection is expected. This is also advantageous in reducing the noise, since only the relevant regions of the optical sensor are operating e.g. only the relevant pixels are operating, so less pixels are operating at one time instance. Therefore, less filtering is needed, and therefore more noise immunity is obtained, as well as less power is consumed on said filtering.

In a second aspect, the present invention relates to a system for optical sensing, comprising:
- an optical sensor comprising a plurality of sensing units, each sensing unit comprising a single photon detector,
- a projector adapted to project a light beam onto a scene, wherein the projector is oriented such that said light beam is projected in a first predetermined angle,
- optics adapted to image the reflected light on sensing units of said optical sensor,
- a controller, configured to perform the method described as above.

Preferred embodiments of the second aspect of the invention comprise one or a suitable combination of more than one of the following features.

The system preferably comprises a scanner adapted to scan said light beam on the scene, such that said light beam is reoriented to at least a second predetermined angle, different from said first predetermined angle, formed with the normal line of the projector, wherein the scanning speed is smaller than a sensing unit read-out rate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.
Figure 1 shows schematically an optical sensor (2) and a projector (3), able to find the distribution and/or density of obstacles (5', 5", 5"') in a scene (10), according to embodiments of the present invention.
Figure 2 shows the location of detections on the optical sensor (2), according to embodiments of the present invention.
Figures 3 and 4 show photon counting for different sensing units (14) of the optical sensor (2), according to embodiments of the present invention.
Figure 5 shows the light beam (4) being under different angles (α, β), according to embodiments of the present invention.
Figure 6 shows obstacles (5', 5", 5‴) having a diameter smaller than the diameter of the light beam (4), according to embodiments of the present invention.
Fig. 7 shows reflections (17') caused by obstacles (5', 5"), according to embodiments of the present invention.

Any reference signs in the claims shall not be construed as limiting the scope. In the different drawings, the same reference signs refer to the same or analogous elements.

### DETAILED DESCRIPTION

The present invention relates to a method and system for optical sensing.

In a first aspect, the present invention relates to a method for optical sensing. The method comprises the step of projecting a light beam onto a scene, by means of a projector (e.g. a light source, or a laser source). The scene is a 3D scene. The scene comprises a medium with an unknown distribution and/or density of obstacles, for example particles in the medium. An example is having illumination into the atmosphere (e.g. air or other gas), with dust particles, or other particles. Another example is illumination in a liquid e.g. water, having particles such as algae, for example with aim to monitor the amount of algae cultivation. Other examples can be envisaged where particles in a medium need to be monitored. For example salt or sand or snowflake particles. It is noteworthy that the method and system of this invention is able to: 1) detect objects in the presence (and absence) of particles, 2) detect (i.e. find out) distribution and/or density of particles in a scene, or 3) perform both of these simultaneously. For example, the system is able to generate both a 3D object map and a detailed particle density profile in real-time, allowing it to support environmental analysis alongside object reconstruction. The method allows working in diverse media such as underwater and in the air, providing flexibility and superior performance compared to existing technologies, which are often limited to specific environmental conditions. Accurate 3D maps of target objects and detailed density profiles of suspended particles, even in highly challenging environments, is obtained. For example, the medium is a scattering and turbid medium.

As an example, the light beam has a predetermined diameter. At least one of said obstacles is smaller than, preferably two times smaller than, said predetermined diameter of said light beam, and/or at least one of said obstacles is partially transparent and partially reflective for said light beam. The two aspects of the obstacles are: 1) the reflective ability, and 2) the ability to allow light to pass through. If there are no obstacles which allow light to pass through due to their size or reflectivity e.g. the obstacles are too big or completely reflective, then it would not be possible to get a very good understanding of the distribution and/or density of obstacles in the scene. This does not mean that objects (e.g. big objects that do not allow light to penetrate) are not allowed to be in the scene, but there must be at least some obstacles which allow this, e.g. dust or algae or salt or sand or snowflake particles or similar, such that it is possible to find out the distribution and/or density of obstacles in the scene. For example, at least some obstacles are partially transparent and partially reflective particles which allow the light beam to travel through as well as partially reflect the light, regardless of whether or not said light beam eventually reaches an object or a non-transparent particle. This allows to find out the distribution and/or density of obstacles in the scene, as shown below. However, even if at a certain angle there were no obstacles which satisfy the above criteria, or in other words in case of an occluding obstacle, it is still possible to find the distribution and/or density of obstacles in the scene by changing the angle under which the light beam is illuminated, as explained below.

It is noteworthy that the invention can be carried out by different types of light sources and beams, for example converging as well as diverging beams.

The projector is oriented for example such that a first predetermined angle is formed with the normal line of the projector. The projector and the optical sensor are on a baseline.

The method further comprises the step of imaging the reflected light from said obstacles or particles, by means of optics, on sensing units of an optical sensor. The optical sensor comprises a plurality of sensing units, preferably arranged in a matrix configuration (e.g. rows and columns). The optical sensor also works if the plurality of sensing units is arranged in a line, as is understood from the below description. Each of said sensing units comprises a single photon detector, preferably a single photon avalanche diode (SPAD), as described below. The invention can also be generalized to photo detectors that are not single photon detectors.

Imaging is done, for example, by means of the appropriate optics, imaging the reflected light from the scene. For example, the light is reflected, after hitting the obstacles in the scene, imaged by said optics, and finally received and detected by the optical sensor e.g. by the corresponding sensing unit to the point on the scene. In other words, such optics ensure the reflected light reaches the corresponding sensing unit.

The plurality of rows and columns of sensing units is advantageous in allowing different filtering methods, for example based on temporal and/or spatial conditions, for example based on neighboring sensing units or based on persisting detections in one sensing unit over multiple (e.g. at least two) time steps, or a combination thereof. This is also advantageous in improving error tolerance. For example, the filter exhibits either a spatial filtering method (i.e. at least two neighbouring pixels have a positive detection simultaneously), a temporal filtering method (i.e. pixels having a repeated positive detection status when receiving repeated pulses e.g. over multiple time windows), or a combination thereof.

The method further comprises the step of, during a plurality of adjacent observation windows, determining locations of detection of said particles in said scene on said optical sensor having imaged the reflected light from said particles or generally any other obstacles, during said plurality of adjacent observation windows. Each of said obstacles corresponds to a location of detection on said optical sensor. For example, each obstacle corresponds to a detection by one sensing unit or by a group of sensing units which detect the reflected light from said obstacle. For example, the point or region on the obstacle which reflects the light from said obstacle is associated to the location of detection (represented by one or more sensing units) on the optical sensor. A group of sensing units detecting one obstacle is preferred such that filtering can be performed, as described below. Preferably, the size of each sensing unit is adapted such that the resolution of the optical sensor is high enough to detect the smallest size of the obstacles which need to be detected (e.g. to sense a reflection of part of the light beam reflected by an obstacle (e.g. particle)). This can also be understood the other way around: the diameter of the light beam should be such that a light spot created by said light beam on said obstacle is at least large enough to be detected by one sensing unit, or preferably by a group of sensing units to allow filtering.

The method further comprises the step of performing detection statistics per sensing unit, at least those having detected the reflected light, over said plurality of adjacent observation windows. The method further comprises the step of estimating, based on said detection statistics, a reflectivity profile of at least part of said plurality of particles in a first volume of the scene along said light beam.

Preferably, the method further comprises the step of determining, based on said reflectivity profile, said determined locations of said imaged light on the optical sensor, said detection statistics and said first predetermined angle, a relative density of said particles in a second volume, wherein the second volume is further away from the projector than the first volume.

Preferably, the step of estimating a reflectivity profile of the plurality of particles includes a calibration step for a known type of said plurality of particles, wherein the method further comprises the step of determining, based on said reflectivity profile, said determined locations of said imaged light on the optical sensor, said detection statistics, said calibration and said first predetermined angle, a density of said particles in said first volume of the scene along said light beam.

Preferably, the method further comprises the step of determining a density of said particles in a second volume along said light beam based on the determined density in the first volume, wherein the second volume is further away from the projector than the first volume.

Preferably, the step of estimating a reflectivity profile is at least partly based on comparing locations of the sensing units having detected reflected light with events on adjacent sensing units.

Preferably, the method further comprises the step of scanning the scene at a scanning speed by reorienting the projection of said light beam in a second predetermined angle (β), different from said first predetermined angle (α), and repeating the steps for said second angle, wherein the scanning speed is smaller than a sensing units read-out rate.

Preferably, the method further comprises the step of constructing, at least partly based on said detection statistics and/or locations of detection, a depth map of said plurality of particles in said scene, wherein said depth map is at least along said light beam. There are many methods to get a depth map of said obstacles, such as triangulation and time-of-flight, as described below. More specifically, the depth map shows obstacles along the light beam, given they are smaller than the diameter of the light beam and/or are partially transparent.

Preferably, the method further comprises the step of constructing a hit map, aggregated over multiple windows of detection, whereby the number of detections per pixel are aggregated, more specifically summed. The resulting per pixel hit statistics gives a kind of intensity map indicating how strong the reflection is in that location. As an example, when a beam of light enters a scattering medium, for example water with scattering particles such as floating sediments, the beam will be scattered while traversing the medium. In the observing sensor, the resulting scattered light will create a glow along the epipolar line associated with the incident beam through the medium. The higher the scattering the more energy will be detected

Based on the depth map, the unknown distribution and/or density of said obstacles in the scene is obtained. This is an approximation of the distribution and/or density of said obstacles in the scene, as it is done along one light beam which is illuminated under one angle. Since the depth map shows all obstacles along the beam (given they are smaller than the diameter of the light beam and/or are partially transparent), and since all obstacles correspond to a detection, and since the optical sensor is based on single photon detection, it is possible to obtain an accurate estimate of the distribution and/or density of said obstacles along the light beam. In order to get an estimate of the distribution and/or density of said obstacles in an area or region of the scene, it is needed to perform the same operation at different light beams angles, and obtain the distribution and/or density of said obstacles along other light beams having other angles, as shown below.

It is noteworthy that the unknown distribution and/or density of said obstacles along one light beam, changes with time, as the obstacles may move instantaneously. Therefore, this is preferably done for a plurality of light beams, and furthermore preferably in multiple time steps (at least one), to be able to get an understanding of the unknown distribution and/or density of obstacles in a region of the scene, which is more accurate, as shown below.

The method is power efficient because, by illuminating only one light beam at one angle, or preferably multiple angles as shown below, it is possible to get a good approximation of the distribution and/or density of the full scene.

Furthermore, by positioning the optical sensor and the projector at a distance from each other, it is possible to spatially separate scattered light from true object reflections, making it easier to differentiate between the two. In other words, this makes it possible to get an understanding of the distribution and/or density of obstacles in the scene along said light beam, or in a region of interest.

Preferably, the method comprises the step of synchronizing the laser pulses with the optical sensor. For example, by tightly coordinating the timing of the laser pulses with the sensor's detection capabilities, the system can reject false pixel events that are caused by random reflections from particles or ambient noise in the liquid. In this case, the system can selectively capture meaningful light reflections, filter out ambient noise, and isolate accurate depth information. The photon detector registers photon events in both space and time, enabling statistical analysis that aids in differentiating between reflected photons from particles and from solid surfaces.

Preferably, the method comprises the step of reorienting said light beam such that at least a second predetermined angle, different from said first predetermined angle, is formed with the normal line of the projector. The light beam may also be oriented to form further predetermined angles with the normal line of the projector, such that a more accurate estimate of the distribution and/or density of said particles in an area of interest of the scene is obtained. For example, the distribution and/or density of said particles in the area between the first and second predetermined angles is found by interpolation of the distribution and/or density of said obstacles on said angles.

For example, the method comprises the step of scanning said light beam on said scene, by means of a scanner, along a trajectory, wherein different points on said trajectory correspond to different angles with the normal line of said projector. Scanning may be 1D or preferably 2D scanning. For example, scanning in a Lissajous fashion or raster scan, or the like, for example a repetitive projection pattern. The scanning means may for example be a MEMS scanner or a mirror (e.g. rotatable), or an optical phase array, or meta surface approach beam scanning, or the like. If scanning is in 1D, then the optical sensor may also comprise a plurality of linearly arranged sensing units (i.e. along 1D).

For example, the method comprises the step of obtaining the distribution and/or density of said obstacles over a region of said scene between the optical sensor and the obstacles corresponding to the first and second predetermined angles, based on the distribution and/or density of said obstacles along said light beam at the first and second predetermined angles. For example, the first predetermined angle is smaller than the second predetermined angle, which means the first predetermined angle corresponds to a higher depth value compared to the second predetermined angle (i.e. since the angle is defined with respect to the normal line of the projector). In this case, it is possible to get a more accurate depth measurement since such measurement corresponds to more than one beam having different predetermined angles. The more the angles, the more accurate the measurement will be over the region of interest. Multi-angle laser scanning reduces occlusions and improves visibility.

In other words, the light beams of different predetermined angles divide the scene into regions or "slices", wherein the different regions have different thicknesses, and wherein the thicknesses determine how accurate the measurement is. For example, if the difference between the two angles is larger, then the slice is large, and therefore the accuracy of the distribution and/or density of obstacles in the scene is low. Therefore, it is preferable that the angle difference between the two light beams is minimal.

This capability to generate a 3D density profile of suspended particles alongside 3D object mapping represents a significant advancement, expanding the system's utility beyond object detection to include environmental analysis and particle distribution mapping.

Furthermore, a challenge is introduced when the first angle is too low, which corresponds to very high depth, since the accuracy of the distribution and/or density of obstacles in the scene is low, due to the presence of many particles in the way of the reflected light beam, which introduce further reflection, absorption, and scattering. It is therefore preferred to have multiple angles to get a better estimate, including large angles. Having light beam with large angles (i.e. corresponding to lower depth) is useful because it allows for the distribution and/or density of obstacles when there are lower number of obstacles, to be known.

Absorption causes the signal to be weak. In this case, it is advantageous (as described below) to use single photon detectors (and even more preferably SPADs), since they can detect single photons, and therefore weaker signals can be detected (i.e. higher sensitivity is achieved). Scattering and reflection may be caused by the obstacles or particles present in the way of the reflected light beam.

Preferably, said depth map is obtained by triangulation between the optical sensor and the projector, and/or by time-of-flight measurement based on said light beam emitted from said projector and received by said optical sensor. The triangulation can also be obtained between two optical sensors, in case a second optical sensor is available. For example, triangulation may be done by triangulating detection points of a first optical sensor with instantaneous position of said a light beam, or with detection points of a second optical sensor (i.e. looking at the scene).

Triangulation allows obtaining the depth of objects in the scene. Since the detection relies on the instantaneous position of the light beam e.g. of the instantaneous position of the emitted light of the projector, the need for stereo-matching is eliminated, for example between the light source and the first optical sensor, or between the first optical sensor and a different optical sensor. For example, the image in the first optical sensor can be matched to the image in the second optical sensor, for example using said light spot as a reference, without need for stereo-matching.

However, it is advantageous to perform triangulation between the optical sensor and the projector, as this eliminates the need for a second optical sensor, hence reducing power consumption and shrinking the required footprint.

Having two methodologies is advantageous as is shown below. For example, it is possible to compare the reading of both measurements to be able to get an indication of the accuracy of the measurement. At low depths, both methods provide similar results, because the number of particles between the optical sensor and a point of a lower depths is much lower than the number of particles between the optical sensor and a point of higher depth.

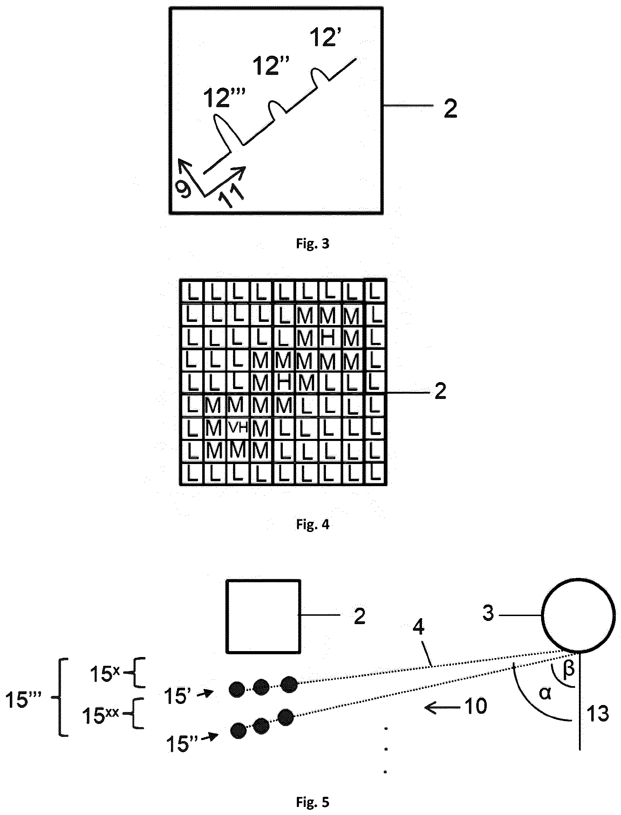

There are different challenges posed for both methods. In case of triangulation, the challenge is that the location of detection on said optical sensor may be blurred, especially for higher depths, because the reflected light from the obstacles goes through many particles to arrive at the optical sensor. The solution to this is photon counting, as shown in Figs. 3-4. In other words, by counting the number of photons received at each sensing unit, it is possible to deduce the distribution and/or density of obstacles or particles in the scene, and hence overcome the blurry detection. Therefore, combining triangulation and photon counting allows to get a more accurate reading. Photon counting is also advantageous in allowing operation in case the reflected signal is weak, for example due to the presence of many particles which e.g. scatters, reflects, absorbs the light.

In case of time-of-flight, the measurement is less accurate due to the presence of particles along the way of the reflected light (i.e. from an obstacle to the optical sensor, i.e. many obstacles are present between an obstacle and the optical sensor, especially at higher depths where the number of obstacles is higher between an obstacle and the optical sensor), therefore the time-of-flight results are less accurate. However, by comparing the readings of the time-of-flight measurement, with the reading of the triangulation, it is possible to find out information about the distribution and/or density of obstacles or particles in the scene. In other words, the difference in depth measurement between the triangulation and time-of-flight measurement, allows to deduce the distribution and/or density of obstacles in the scene (i.e. between an obstacle and the optical sensor). This is because the difference is introduced by the obstacles. Combining triangulation and time-of-flight measurement as described above also allows to obtain a larger working distance, since distribution and/or density of obstacles in the scene can be done for higher depths. The bottleneck occurs when triangulation and the blurry detection corresponding thereto, as described above, cannot be corrected.

Based on the above, combining triangulation, photon counting, and time-of-flight, allows to get both a larger working distance with more accurate reading.

Photon counting is also advantageous in differentiating detections from objects and from particles, since the nature of the reflection is different, for example the number of photons reflected by each may be different. The photon counts are analyzed to assess particle density, while depth measurements are refined using triangulation and time-of-flight methods. By comparing time-of-flight values to triangulation-based depth estimates, the method is able to determine light scattering levels, which helps distinguish between particle reflections and direct reflections from objects of interest. For example, by knowing the medium which the laser penetrates, it is possible to differentiate between particle reflection and reflection from objects in the scene, for example using formulas known in the art. This can also be done by data gathering and/or machine learning, for example as shown in Fig. 4.

For example, a first depth map is obtained by said triangulation between the optical sensor and the projector, and a second depth map is obtained by said time-of-flight measurement based on said light beam emitted from the projector and received by the optical sensor. Thereafter, the method comprises the step of comparing the first and second depth maps, and based on the difference (i.e. between the first and second depth maps), deducing (e.g. by extrapolation, interpolation, or other methods) the distribution and/or density of obstacles in said scene, or in a region of the scene. In other cases, the distribution and/or density of obstacle in a region can be interpolated based on the difference between the first and second depth map along one light beam having one angle, with the difference between the first and second depth maps along another light beam having a different angle, wherein the region is enclosed by the light beams of the two different angles.

Preferably, the method comprises the step of repeating the steps of the method in at least two observation windows or time steps, which could be, but not necessarily, consecutive time steps or observation windows. This allows to differentiate between objects and particles, since particles move faster than objects. For example, the depth map of the two time steps is compared, and further information is concluded based thereon. For example, if an obstacle doesn't move in different time steps, then this obstacle is likely an object, and similarly if an obstacle moves in different time steps, then this obstacle is likely to be a particle. Additionally or alternatively, in some situations, it could be assumed that the object is the furthest obstacle from said scanner, while the particles are the closest obstacles from said scanner. Additionally, or alternatively, it some situations, it could be assumed that objects are bigger than the particles. All these ways allow to differentiate between particles and objects, whether in one or in multiple measurement time steps.

Preferably, repeating the measurement in two time steps can be in two different ways. Firstly, the laser illumination is at the same location or substantially the same location (i.e. the predetermined angle is kept the same), for the two different time steps. In other words, the reflection of the laser illumination on the optical sensor remains on the same sensing unit or pixel, or in other words, the movement of the scanner is so small that it is less than the resolution of the optical sensor. In this case, having two different measurements at two different time steps, enables differentiating between particles and objects, as mentioned above.

Alternatively, the second way, is that the illumination is at a different location (i.e. (i.e. the predetermined angle is changed to another predetermined angle). By comparing the two depth maps, it is also possible to differentiate between objects and particles, as objects will likely not have moved faster than the scanning speed of the scanner. Furthermore, this is advantageous in case some particles present in the scene are too big and occluding the measurement.

The two abovementioned approaches could also be combined. For example, the measurement is repeated in two different time steps for a static illumination (i.e. at the same location), and thereafter, the illumination is moved in a third (and possibly fourth) time step to a (slightly) different location.

Preferably, said first and second depth maps correspond to a second region (or simply corresponds to a light beam having an angle with the normal line of the projector). The second region has an unknown distribution and/or density of obstacles. On the other hand, a first region, closer to said optical sensor from said second region, has a known distribution and/or density of obstacles in said scene. This is explained in Fig. 5. The unknown distribution and/or density of obstacles in said second region, is deduced, for example extrapolation (or other methods), based on the known distribution and/or density of obstacles in said first region. For example, the first region is in direct contact with, or closer to, the optical sensor, therefore the absorption, scattering and reflection introduced by obstacles in the first region is known and can be accounted for, and therefore extrapolating the unknown distribution and/or density of obstacles in the second region is possible. The thickness of the first and second region is chosen such that the results of said extrapolation are accurate. For example, the accuracy of the results when the first region is thicker than the second region is better than the accuracy of the results when the first region is smaller than the second region.

For example, the distribution and/or density of obstacles in the scene are found in accumulatively, by first finding the distribution and/or density of a first region close to the optical sensor (being close to the optical sensor results in having minimal influence of particles on the time-of-flight measurements), then based thereon, finding the distribution and/or density of a second region, based on knowledge of the distribution and/or density of the first region, and so on.

Preferably, the method comprises the step of determining, based on said difference between the first and second depth maps, reflection, scattering and absorption parameters of said obstacles in said scene. For example, wherein the triangulation depth map corresponds to locations of said particles in said scene, and wherein the time-of-flight depth map corresponds to scattering and absorption parameters of said particles in said scene.

Preferably, wherein the obstacles are particles, they have a diameter smaller than 1 millimeter, preferably smaller than 100 micrometer, more preferably smaller than 10 micrometer. For example, dust particles, algae or snowflakes or sand, or others. For example, some obstacles are particles, while other obstacles are objects in the scene. For example, the particles have different diameters from each other.

Preferably, the method comprises the step of counting the photons received on each sensing unit. The method further comprises the step of establishing photon statistics on said optical sensor. The method further comprises the step of determining, based on said photon statistics, the distribution and/or density of said obstacles in the scene. For example, the statistics allow to understand which parts of the optical sensor had the highest photon count, and which have the lowest photon count, for example, in a given time interval.

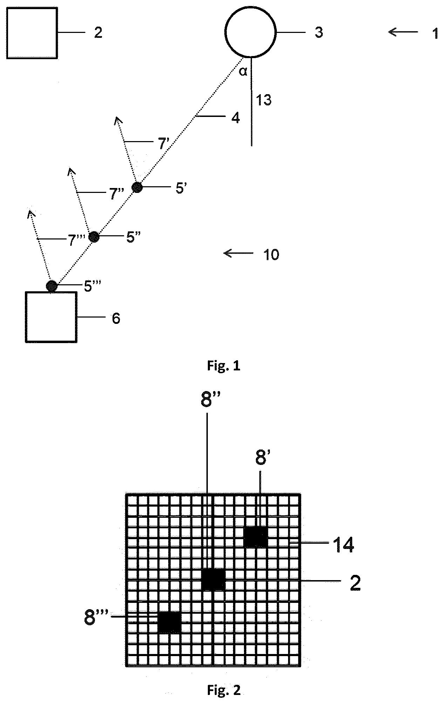

Preferably, the method comprises the step of filtering noisy detections on said sensing units, based on said photon detection statistics. For example, the depth map obtained by triangulation may be noisy (e.g. blurry) at higher depths, and therefore photon statistics allow to filter out said noisy detections, as shown in Fig. 3-4, and deduce the scene as in Fig. 1-2.

Preferably, the step of determining the unknown distribution and/or density of said obstacles, comprises determining depth of objects (and e.g. contours of said objects, or in other words, a partial 3D model or 3D understanding of the obstacle) in the scene. Additionally or alternatively, the step of determining the unknown distribution and/or density of said obstacles, comprises determining distribution and/or density of particles in the scene.

Preferably, the method comprises the step of filtering the detection determined by one sensing unit of said optical sensor, based on the presence of a detection over at least one neighboring sensing unit to said one sensing unit at one time step or observation window, and/or based on the presence of said detection over at least two consecutive time steps or observation windows. This allows reliable detection. For example, a noise signal would neither, in most cases, appear over many neighboring pixels, nor appear on the same pixel over multiple consecutive time steps or observation windows. Filtering is particularly advantageous for this invention as it makes it easier to distinguish the active light from the noise. For example, the method comprises the step of distinguishing (e.g. by filtering) the active signal (e.g. the light spot on the scene) from the background noise, on the optical sensor.

Furthermore, since the light beam has a known shape e.g. dot-shaped or a semi-dot or disk-shaped or a collection of dots or any other suitable shape, the reflection by the obstacles, and therefore the detection by the sensing units, and the number of sensing units / shape of detection, can be anticipated, and therefore easier filtering is obtained.

Arranging the optical sensor as a plurality of rows and columns is advantageous in allowing the detected signal to be filtered, for example using temporal and/or neighborhood information, for example as described in PCT IB2021 054688, PCT EP2021 087594, PCT IB 2022 000323, and PCT IB2022 058609. For example, checking the detection of the neighboring sensing units, since the detections are likely to be detected over more than one pixel, as described in PCT EP2021 087594. Alternatively or additionally, checking the persistence of the detections over time as described in PCT IB2022 058609. Therefore, the detections which are persistent over a long period of time are likely true detections, and the detections otherwise are likely false detections. Alternatively or additionally, each detector is connected with one column bus and one row bus, as described in PCT/IB2021/054688, to prevent reading the output pixel by pixel, which is advantageous in reducing the noise and also making the system faster. Other filtering mechanisms may be envisaged, as described in PCT IB2021 054688, PCT EP2021 087594, PCT IB2022 000323, and PCT IB2022 058609. For example, the system is adapted to filter the location of detection, determined by said plurality of sensing units. For example, reflected light is segregated from ambient light and noise. This may be based on the presence of said detection over one or two or more neighboring or semi-neighboring sensing units, for example by considering only pixels in the true status having at least one neighboring pixel also in the true status. This may additionally or alternatively be based on the presence of said detection over at least two consecutive time steps or observation windows. For example, considering only pixels in the true status having at least one neighboring pixel also in the true status in the plurality of pixels obtained in one observation or a combination of the at least two consecutive or semi-consecutive observation windows.

Preferably, the light beam is pulsed. The light beam may be continuous or pulsed, and the present invention can work with either. It is however preferrable to use a pulsed light beam (e.g. a pulsed laser) since the power is concentrated in the pulse i.e. each pulse has a higher power while maintaining the same average power, thereby allowing easier detection and filtering. Also, using a pulsed light beam is advantageous when using persistence or neighborhood conditions (explained below) for better filtering, as it allows to check said conditions based on the pulse length, instead of based on observation windows as in the case of a continuous pulse, which is typically longer than the pulse length. For example, the pulse width is at least 1 nanosecond, preferably at least 10 nanoseconds.

Preferably, the method further comprises the step of constructing a 3D representation of said scene as mentioned above. For example, using triangulation based on two cameras, or based on one camera and one illuminator, or using time of flight, or other methods for measuring depth.

Preferably, the method comprises the step of activating sensing units in a first region of said optical sensor where a detection of the reflected light by said optical sensor is expected, and deactivating sensing units in at least a second region where a detection of the reflected light by said optical sensor is not expected, wherein said activating and deactivating are based on the instantaneous projection vector direction of the light beam on the scene. For example, it is known where the beam is shining at each moment, therefore a detection in a spot or area in which the beam is not shining at that moment, is likely a false detection. For example, this is done by having a plane optical sensor, wherein said plane optical sensor comprises a plurality of rows and columns of said sensing units, wherein said optics have an optical center, wherein said optical center, and said light beam define a projection plane, said projection plane forming a straight line image on the plane optical sensor.

Preferably, the method comprises the step of configuring the light beam to have, in at least two different observation windows, at least two different wavelengths. By analyzing the detection on the optical sensor, it is possible to deduce the type of particles. For example, different particles would reflect light in different ways.

In a second aspect, the present invention relates to a system for optical sensing. The system comprises an optical sensor, comprising a plurality of sensing units, each sensing unit comprising a single photon detector. The system further comprises a projector adapted to project a light beam onto a scene, wherein the projector is oriented such that a first predetermined angle is formed for example with respect to the normal line of the projector, wherein said light beam has a predetermined diameter.

The system further comprises optics adapted to image the reflected light on sensing units of said optical sensor. i.e. the optics is able to make an image of said scene on sensing units of said optical sensor, as described in the first aspect. For example, based on the location of the light beam imaged on said optical sensor, the depth information of the scene can be calculated by triangulation, as described in different parts of the document, or by different methods for measuring depth known in the art. For example, the reflected light from the scene (e.g. from obstacles in the scene) is received by at least one sensing unit, after which the optical pulse is translated into an electrical signal or logic pulse. Each pulse is timestamped with respect to a reference clock.

The scene comprises a medium with an unknown distribution and/or density of obstacles. For example, at least one of said obstacles is smaller than, preferably two times smaller than, said predetermined diameter of said light beam, and/or wherein the at least one of said obstacles is partially transparent and partially reflective to said light beam. The system is adapted to determine, based on said reflected light, locations of detection of said obstacles in said in said scene, for example wherein each of said obstacles corresponds to a location of detection on said optical sensor. The system is adapted to construct, based on said locations of detection, a depth map of said obstacles in said scene, wherein said depth map is at least along said light beam. The system is further adapted to determine, based on said depth map, the unknown distribution and/or density of obstacles in said scene.

The system also comprises a controller able to perform the method according to the first aspect.

Preferably, the system further comprises scanning means (e.g. a scanner) adapted to scan the light beam on the scene, such that the light beam is reoriented to at least a second predetermined angle, different from the first angle, for example the angle is calculated with respect to the normal line of the projector. For example, the scanner is scanned along a trajectory, and the distribution and/or density of obstacles is measured along the light beam having the chosen predetermined angle. For example, the trajectory is determined by a set of angles. As mentioned above, the scanning speed is advantageously smaller than the refresh rate of the sensor.

Preferably, the system is adapted to obtain said depth map by triangulation between the optical sensor and the projector, and/or by time-of-flight measurement based on said light beam emitted from said projector and received by said optical sensor, as described in the first aspect.

Preferably, the system comprises a second optical sensor, for example constructed similarly to the aforementioned optical sensor. Preferably, the system is adapted to triangulate detection points of said first optical sensor with, in a first case, projection position of said first projector, or, in a second case, with detection points of said second optical sensor. This allows to obtain the depth information at each point (in this case, at each obstacle) in the scene. In the first case, it is known where the light source is shining at each moment. Therefore, triangulation may be based on the detection points of said first optical sensor, and the location from where the light source is originating, similarly to the case in which a different optical sensor is used to achieve said triangulation. For example, considering the light source as a camera or an optical sensor, instead of seeing or detecting the light spot with the sensing units. For example, the instantaneous position and orientation of the light beam projected by said first projector is triangulated with the detection of one optical sensor. In the second case, the detection points of the two optical sensors are triangulated. For example, wherein the system is adapted to triangulate detection points of said optical sensor with instantaneous position of said light beam, or with detection points of said second optical sensor.

Preferably, each of said photodetectors is a single photon detector, preferably a single photon avalanche detector SPADs. Alternatively, said photo detector is an avalanche photo detector. Single photon detectors are advantageous since they are fast by nature, such that the position of the light beam (and the spot it leaves on the scene) is detected in a fast manner and accurate manner. Single photon detectors also minimize the energy needed to be able to detect said beam. SPADs are also sensitive to a single photon, which means that the active projected structure will need a minimum amount of energy. Another advantage is sub-nanosecond response time of detectors such as SPADs, meaning the photon is detected and encoded into a digital signal in nanoseconds.

For example, the detector is adapted to output a logic signal e.g. an electrical detection signal upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal. Preferably, each photo detector is arranged in a reverse biased configuration.

The use of single photon, or specifically SPAD technology, provides heightened sensitivity, enabling accurate measurements even under low light or high absorption conditions.

Preferably the system is designed to output only pixels that have detected light, significantly reducing the bandwidth required for transmission and minimizing the computational load during post-processing. This event-based approach enables efficient data handling by focusing only on the pixels where meaningful light reflections occur, discarding empty or irrelevant data.

Preferably, the light source (i.e. projector) is adapted to be in a wavelength detectable by the sensing units of the optical sensor. For example, between 100 nanometer and 10 micrometers, preferably between 100 nanometer and 1 micrometer. For example, each optical sensor comprises photo detectors able to detect photons impinging on each detector within a wavelength detection window falling within the range of 100 nanometer and 10 micrometers, preferably between 100 nanometer and 1 micrometer. It is also possible to use multiple wavelengths to reduce sensitivity to surface and color, and then have a filter on chip.

Any feature of the second aspect (system) may be as correspondingly described in the first aspect (method). For example, the system of the second aspect is operating based on (or similarly to) the method of the first aspect.

In a third aspect, the present invention relates to use of the method of the first aspect and/or the system of the second aspect, for optical sensing, preferably atmospheric and/or underwater sensing (or in any liquid), for detection of particles (e.g. density and/or distribution of particles) and/or objects in a scene, or in one embodiment, detection of objects in the presence of particles, or other embodiments as described in the first and second aspect of the present disclosure.

In a fourth aspect, the present invention may be explained in the following set of steps:
Step 1: providing an array of pixels
Step 2: providing a scanning light source having a narrow light beam, wherein the angle of scanning at each time step is known
Step 3: arranging the light source to have a baseline from the array of pixels
Step 4: predefine the volume to scan and split it in sub-volumes (e.g. this is a mathematical representation)
Step 5: scan the light source such that the beam visits each sub volume at least one time (e.g. scanning period can be defined by the time in which all sub volumes have been visited)
Step 6: storing events from the array of pixels one time at each observation window, the observation window being much smaller than the scanning period
Step 7: For every observation window, distinguish:
   1) events of light reflected from particles in sub volumes visited by the light beam, wherein the distance to each sub volume is measured at each moment (e.g. by TOF or triangulation),
   2) events at the pixel position from sub volumes not visited by the light beam at this moment, and associate these with nearby sub volumes which are visited by the light beam,
   3) events which are expected but which have not happened at the pixel position, associated to sub volumes which are visited by the light beam.
Step 8: gather the data.
Step 9: obtaining predefined functions which link the gathered data to the density. Those functions can be estimated by 1) pre-calibration (running the system under controlled environment), or 2) by theoretically (e.g. simulating) the system using formulas with known particles having e.g. known density and shapes and reflectivity, or 3) finding the properties of the particles by measuring the reflection. In other words, by having prior knowledge of the distance to the particles (using triangulation or time of flight), the laser angle, and the measured reflection, we can find out properties of the particles. This is done at least for nearby subvolumes, and then using this information for further subvolumes.
Step 10: Apply the predefined formulas to the gathered data starting from sub volumes closer to the camera and then computing density for them and then applying this computed density to compute density for "next layer" or further away sub volumes.
Step 11: The result is a 3D array of computed densities per sub volume.

Optional: In some cases you can use different light frequencies and gather also different frequencies, and this way it is possible to distinguish different particles and then use a specific narrow spectrum if there is interest in one particle

Further characteristics and advantages of embodiments of the present invention will be described with reference to the figures. It should be noted that the invention is not restricted to the specific embodiments shown in these figures or described in the examples, but is only limited by the claims.

Fig. 1 shows an optical sensing system (1) comprising an optical sensor (2) and a projector (3). The projector is projecting a light beam (4) onto a scene (10). The light beam (4) has a first predetermined angle (α) with the normal line (13) of the projector (3). The scene (10) comprises a medium across which the light beam travels. The medium has an unknown distribution and/or density of obstacles (5', 5", 5"'). In this case, an example of a scene having three obstacles is given: a first obstacle (5'), a second obstacle (5"), and a third obstacle (5‴). The first two obstacles (5', 5") are particles which are partially transparent to said light beam (4), while the third obstacle (5‴) is an object (6).

For example, the medium can be air, with the first two obstacles being dust particles, and the third obstacle being an object which can be detected. As another example, the medium can be water (i.e. underwater sensing), with the first two obstacles being algae particles, and the third obstacle being an object underwater. In one embodiment, the system is able to detect objects in the presence of particles (and of course also in the absence of particles), and thereafter by scanning the light beam in multiple angles, the system is able to create a partial 3D map of the object. In a second embodiment, the system is able to detect particle distribution and/or density in a medium, along a light beam (4), by having the light beam with the first predetermined angle. Alternatively, the particle distribution and/or density in the medium is found in a region, by scanning the light beam under different angles, to be able to estimate the particle distribution and/or density more accurately in a region. In a third embodiment, the system is able to do both: detect objects in medium comprising particles, and at the same time obtain particle distribution and/or density in said medium.

The first two obstacles (5', 5") partially let the light beam (4) pass, and partially reflect the light beam (7', 7"). It is assumed that the object, being the third obstacle (5‴), fully reflects the light beam (7‴). As a result, three light beams are reflected to the optical sensor (2): a first, a second, and a third reflected light beam (7', 7", 7‴). From there on, triangulation or time of flight may be used to calculate the depth.

Fig. 2 shows the locations of detection (8', 8", 8‴) on the optical sensor (2). The optical sensor (2) comprises a plurality of sensing units (14) arranged in a matrix configuration. The information provided by the optical sensor (2) may suggest that the first two detections (8', 8") are either one or both of 1) associated with partially transparent and partially reflective obstacles (e.g. particles), since they allow light to pass through to reach a further obstacle, and since they reflect light at least partially, or 2) associated with particles small enough to allow light to pass. On the other hand, and using similar logic, the information may also suggest that the third detection (8‴) is either one or both of 1) associated with a non-transparent and/or a non-reflective obstacle (e.g. particle), since it does not allow light to pass through to reach a further obstacle, or 2) associated with particles big enough such that they do not allow light to pass. Note that this is a simplified figure with a relatively small number of pixels, while in a real-life situation there may be many more pixels and many more obstacles detected on said pixels. Also, depending on the size of the detection, it can be deduced that a detection is associated with a particle (since particles have known sizes), or whether it is another type of obstacle. However, photon counting can provide a better understanding regarding which obstacles are particles, and which are objects, as shown in Fig. 3.

By means of clarification, in Fig. 2, since the projector is kept at one projection angle, then it can be assumed that the light beam will travel along a linear path, which means that detections on the detector will also be along a line. By knowing this, it is possible to exclude false detections.

Furthermore, the middle detection, 8", likely corresponds to a particle. However, either 8' or 8‴ may correspond to a target object. By knowing the position of the projector, and/or the angle of projection, it is possible to conclude which of these corresponds to a particle, and which corresponds to a target object. In other words, the furthest detection has in many cases more chances to be associated with a target object than with a particle. To know for sure, detection statistics as shown in Fig. 3 may be helpful, since objects reflect like in a different way than particles.

Fig. 3 shows photon counting (9) for different sensing units (14) across (11) the optical sensor (2), in the case in which the light beam (4) is under the first predetermined angle (α). Performing the same computation under different angles of the light beam (4) allows to get a better understanding and a more accurate analysis on the distribution and/or density of the obstacles, and helps to filter out noisy detections. Fig. 4 shows, similarly to Fig. 3, photon counting for the sensing units (14) in the optical sensor (2), wherein some sensors have a low photon count (L), medium photon count (M), high photon count (H), and very high photon count (VH). The particles have high photon count because they reflect a portion of the light back to the optical sensor (2). However, the object has a much higher photon count, assuming that the object is non-transparent, while the particles are partially transparent. This can help distinguish between particles and objects in the scene.

Fig. 4 also shows that detections can be blurry due to light scattering by particles and objects in the scene. However using photon counting, it is possible to overcome the issue of light scattering, and also filter out any false positive detections. This is because photon counting allows to differentiate between reflection e.g. reflections from particles and reflections from objects that are not particles. Other filtering mechanisms, as explained above, can also help in filtering out false positive detections.

Photon counting in pixel sensors significantly improves noisy or blurry detection by enhancing signal-to-noise ratio and spatial resolution, resulting in clearer, more detailed, and more informative images. Photon counting eliminates readout noise and dark current, effectively removing the detector as a source of noise. This results in an exceptional signal-to-noise ratio, allowing for clearer and more accurate image detection. Photon counting also minimizes signal spread, resulting in a point spread function no wider than a pixel. This maximizes spatial resolution, leading to sharper and more detailed images. Photon counting may for example count every detected photon individually, resulting in high contrast and sharp images. Photon counting detectors provide a very high dynamic range, allowing for accurate detection of both weak and strong signals.

Fig. 5 shows how the distribution and/or density of obstacles can be measured for a region (15‴, 15^{x}, 15^{xx}), instead of being measured along the light beam (15', 15"). For example, consider a first light beam (15') having a first predetermined angle (α) with the normal line of the projector (3), and a second light beam (15") having a second predetermined angle (β) with the normal line of the projector (3). In this case, the distribution and/or density of obstacles, or particles, can be estimated for the region (15^{xx}), for example by interpolation or other suitable methods, based on the measurement of distribution and/or density along the light beams (15', 15"). By having more than two predetermined angles, a more accurate estimate is obtained.

Furthermore, the distribution and/or density in a region close to the sensor, such as 15^{x}, can also be estimated based on the first light beam (15'). For example, it can be assumed that the distribution and/or density in the region 15^{x} is similar to the distribution and/or density along the first light beam (15'). This is because the region 15^{x} is sufficiently close to the projector, and therefore the reflection and scattering (during the travel of the light beam from the projector to the sensor) due to the obstacles is minimal.

In other words, the knowledge of the reflection and scattering behavior in the regions (e.g. 15^{x}) closer to the light beam and sensor can be taken into account when estimating the reflection and scattering behavior in the regions (e.g. 15^{xx}) further from the light beam and sensor. For example, the reflection and scattering behavior from the region 15‴ is equal to the combined reflection and scattering behavior in the regions 15^{x} and 15^{xx}. This can be done further for different light beam angles to be able to estimate the distribution and/or density of obstacles / particles for a bigger region. The advantage of this technique is obtaining an accurate estimate of the distribution and/or density of particles in the scene. For example, in case of a small angle between the light beam and the normal line of the projector, then the distance between the particles and the optical sensor is high (e.g. 15"), and therefore the reflected light experiences reflection /scattering / absorption of particles present in that distance, and since the distribution and/or density of these particles at lower distances is not yet known (e.g. 15'), it is difficult to obtain a good estimate of the distribution and/or density of the particles at higher distances (e.g. 15").

It can also be assumed that, in case of many light beams having many different angles, that the distribution and/or density of particles along the light beams is similar to distribution and/or density in the area falling between the two light beams (15^{x}, 15^{xx}). The thickness of each region (15^{x}, 15^{xx}) can be varied depending on the accuracy needed.

Finding an estimate for density of particles in regions (15^{x}, 15^{xx}) helps to estimate the density of particles in further regions below, since the light reflection / scattering in the regions (15^{x}, 15^{xx}) can be taken into account. For example, if the distribution and/or density is known in region 15^{x}, then the distribution and/or density can be found in region 15^{xx}, by relying on the difference between the triangulation and time-of-flight measurement, as explained in the description, since the difference between the two measurements is related to the scattering / reflection / absorption of particles to the reflected light beam, and therefore the time-of-flight measurements results are affected. However, since the triangulation measurement allows better accuracy, as described above, then it is possible to correlate the difference between the triangulation and time-of-flight measurement to the distribution and/or density of obstacles or particles in the scene.

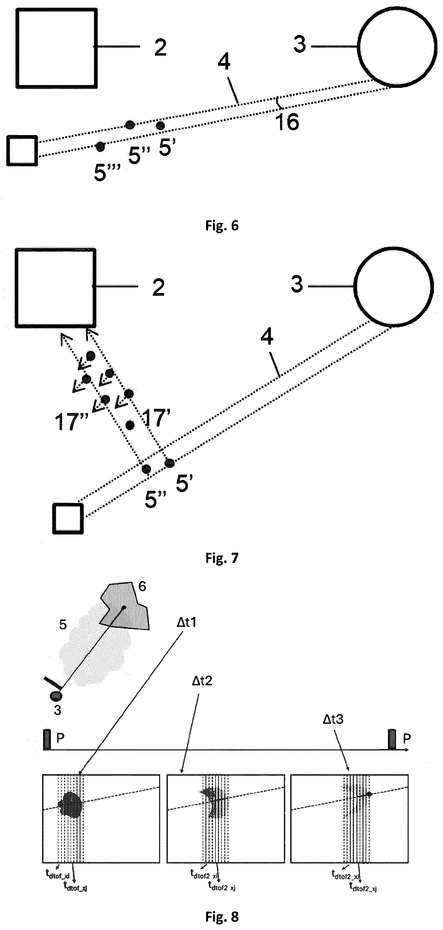

Fig. 6 shows that the diameter (16) of the light beam (4) is larger than the diameter of particles (5', 5", 5"') in said scene (10). Preferably, it is more than 20% or more than 50% or more than twice as large. Generally, the light beam diameter is large enough to be able to overcome the particles (5', 5", 5"') and therefore produce useful information thereof. In another embodiment, the obstacles (5', 5", 5"') may be larger than the diameter of the light beam (4), in which case they should be partially reflective and partially transparent.

Fig. 7 shows how reflections (17') to the optical sensor (2), caused by obstacles (5', 5"), are faced by other obstacles, hence being reflected again (17"). This is the reason why comparing time-of-flight measurements with triangulation measurement allows to get an indication on the distribution and/or density of obstacles in the scene. This is also the reason why it is preferred that the distribution and/or density of obstacles are found accumulatively i.e. the distribution and/or density of obstacles is found first for larger angles (i.e. less depth), since the influence of obstacles for time-of-flight measurement is minimal. Thereafter, the distribution and/or density of obstacles is found accumulatively for larger depths, which allows to get an understanding of the distribution and/or density of obstacles in a region of the scene.

Fig. 8 illustrates how the sensor works in different time-windows to differentiate origins of reflected photons. The total exposure is split into a number of observations windows with a period Δt_{sync}. Inside each of these observation windows, events are detected, and for each column group of pixels, a finer timestamp is generated based on the first observation in this column group. By repeating the pulses (P) we can generate spatially located histograms using the pixel locations and the coarse and fine time information.

In the first observation window, Δt1, for example between 0 and 50 nanoseconds, the closest particles create backscattering, and events are generated in this window. For every group of pixels, we obtain the first time of flight measurement for that group.

Similarly, for the second and third observation windows, Δt2 and Δt3, for example between 50-100 and 100-150 nanoseconds, respectively, further particles create backscattering.

In other words, by knowing when each detection was received and on which pixel or pixel group, we can calculate the time of flight, attribute said detection to a depth in the scene, and differentiate which detection corresponds to which particle or object in the scene.

Additionally, using the time information, we can anticipate where the detection will be received on the array of pixels, and based thereon, we could activate or deactivate regions of pixels in the array of pixels accordingly.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

Further explanations of the problem and solution:
The underwater environment presents unique and significant challenges when it comes to detecting objects and measuring distances. One of the most widely used techniques in modern range-finding and depth measurement systems is active light sensing, which includes solutions such as LIDAR. However, these systems face several issues when applied underwater due to the properties of light interaction with water, including:
- Light Absorption and Scattering: Water absorbs light quickly, especially at certain wavelengths, reducing the effective range of optical sensors. Moreover, light can scatter when it encounters particles in the water, making it difficult to obtain clear, unaltered reflections from the object of interest.
- Multipath Scattering Effect: When using LIDAR or other active light systems, a significant challenge is that the scattered light from particles in the water can interfere with the reflections from solid objects. This can cause the system to misinterpret distances, as both the reflected light from particles and the object arrive at the sensor simultaneously. The resulting depth values are incorrect because the light paths from the particles and the object are mixed, leading to false reconstructions.

For LIDAR systems equipped with histogram builders, this issue becomes more complex. These systems must either process multiple histogram peaks, which consumes significant processing power, or rely on the strongest peak. However, in the case of contamination from particles, the closest particle's reflected light will often produce the highest peak, leading the system to prioritize incorrect depth data from the particle over the actual object, further contributing to erroneous reconstructions.
- Triangulation System Limitations: Triangulation-based systems, which rely on measuring angles and distances using optical or laser systems, also face limitations in underwater conditions. Light absorption reduces the system's effective range, and traditional sensors may struggle to resolve depth values accurately. Special sensor technologies, such as single-photon avalanche diodes (SPADs), may be required to detect weak light signals that have traveled long distances through water, further complicating the system design.
- Noise from Diffuse Particles: In murky water, non-organic particles such as sediments, algae, or other suspended matter add noise to the sensor readings. These particles reflect light in unpredictable ways, further complicating the measurement process by introducing "noise" events that may be falsely interpreted as solid objects. As a result, accurate depth perception becomes increasingly difficult.

### LIST OF REFERENCE SIGNS

- **1**: System
- **2**: Optical sensor
- **3**: Projector
- **4**: Light beam
- **5', 5", 5‴**: Obstacles and/or Particles and/or objects
- **6**: Object
- **7', 7", 7**‴: Reflected light
- **8', 8", 8**‴: Locations of detections
- **9**: Photon counting
- **10**: Scene
- **11**: Distance
- **12', 12", 12‴**: Peaks in photon counting
- **13**: The normal line of the projector
- **14**: Sensing unit
- **15', 15"**: Distribution and/or density along light beams
- **15^{x}**, **15^{xx}**, **15**‴: Distribution and/or density in a region
- **16**: Diameter of the light beam
- **17', 17"**: Reflections

## Claims

1. A method for optical sensing, the method comprising the steps of:
- projecting a light beam (4) onto a scene (10), by means of a projector (3), wherein the scene (10) comprises a medium including a plurality of particles (5', 5", 5‴),
wherein the projector (3) projects the light beam (4) in a first predetermined angle (α),
- imaging light of said light beam reflected (7', 7", 7‴) by said plurality of particles, by means of optics, on sensing units (14) of an optical sensor (2), wherein each of said sensing units (14) comprises a single photon detector,
- during a plurality of adjacent observation windows, determining locations (8', 8", 8‴) of the sensing units within the optical sensor having imaged said reflected light (7', 7", 7‴);
- performing detection statistics per sensing unit over said plurality of adjacent observation windows; and
- estimating, based on said detection statistics, a reflectivity profile of at least part of said plurality of particles in a first volume of the scene (10) along said light beam.

2. A method according to claim 1, wherein the method further comprises the step of determining, based on said reflectivity profile, said determined locations of said imaged light on the optical sensor, said detection statistics and said first predetermined angle, a relative density of said particles (5', 5", 5"') in a second volume, wherein the second volume is further away from the projector than the first volume.,.

3. Method according to any of the previous claims, wherein the step of estimating a reflectivity profile of the plurality of particles includes a calibration step for a known type of said plurality of particles, wherein the method further comprises the step of determining, based on said reflectivity profile, said determined locations of said imaged light on the optical sensor, said detection statistics, said calibration and said first predetermined angle, a density of said particles (5', 5", 5‴) in said first volume of the scene (10) along said light beam.

4. Method according to claim 3, wherein the method further comprises the step of determining a density of said particles in a second volume along said light beam based on the determined density in the first volume, wherein the second volume is further away from the projector than the first volume.

5. Method according to any of the previous claims, wherein the step of estimating a reflectivity profile is at least partly based on comparing locations of the sensing units having detected reflected light with events on adjacent sensing units.

6. Method according to any of the previous claims, wherein the method further comprises the step of scanning the scene at a scanning speed by reorienting the projection of said light beam (4) in a second predetermined angle (β), different from said first predetermined angle (α), and repeating the steps for said second angle, wherein the scanning speed is smaller than a sensing units read-out rate.

7. Method according to any of the previous claims, wherein the method further comprises the step of constructing, at least partly based on said detection statistics and on said first predetermined angle, a depth map of said plurality of particles (5', 5", 5‴) in said scene (10), at least along said light beam (4).

8. Method according to claim 7, wherein the step of constructing said depth map includes - constructing a first depth map obtained by triangulation between the optical sensor (2) and the projector (3),
- a constructing a second depth map obtained by time-of-flight measurement based on said light beam (4) emitted from said projector (3) and received by said optical sensor (2), and
- a step of comparing said first depth map and said second depth map.

9. Method according to claims 7 or 8, wherein the method comprises the step of determining, based on a difference between the first and second depth maps, scattering and absorption parameters of said particles (5', 5", 5‴) in said scene (10).

10. Method according to any of the previous claims, wherein the particles (5', 5", 5‴) have a diameter smaller than 1 millimeter.

11. Method according to any of the preceding claims, wherein the method comprises the step of filtering noisy detections on said sensing units (14), based on said detection statistics (12', 12", 12‴).

12. Method according to any of the previous claims, wherein the method comprises the step of filtering the detection determined by one sensing unit of said optical sensor (2), based on the presence of a detection over at least one neighboring sensing unit to said one sensing unit at one observation window, and/or based on the presence of said detection over at least two consecutive observation windows.

13. The method according to any of the previous claims, wherein said light beam (4) is a pulsed light beam.

14. The method according to any of the previous claims, wherein the optical sensor is a plane optical sensor (2), wherein said plane optical sensor (2) comprises a plurality of rows and columns of said sensing units (30), wherein said optics have an optical center (31), wherein said optical center (31), and said light beam (5) defining a projection plane (32), said projection plane (32) forming a straight line image (33) on the plane optical sensor (2); wherein the method further comprises the step of activating sensing units (30) of said optical sensor (2) in a first region (17) comprising at least the straight line image (33), and deactivating sensing units (30) in at least a second region (16) away from the straight line image (33).

15. An optical sensing system (1), comprising:
- an optical sensor (2) comprising a plurality of sensing units (14), each sensing unit (14) comprising a single photon detector,
- a projector (3) adapted to project a light beam (4) onto a scene (10), wherein the projector (3) is oriented such that said light beam (4) is projected in a first predetermined angle (α)
- optics adapted to image the reflected light (7', 7", 7‴) on sensing units (14) of said optical sensor (2),
- a controller, configured to perform any of method claims 1 to 14.
